# EUROPÄISCHE PATENTANMELDUNG

(11) **EP 2 112 248 A1**
(43) Veröffentlichungstag der Anmeldung: **28.10.2009**
(21) Anmeldenummer: 09155830.4
(22) Anmeldetag: 23.03.2009
(51) Int. Cl.: C23C 14/16, C23C 10/48, C23C 10/18, C23C 10/28, C23C 14/24, C23C 16/06

(54) **Verfahren zur Herstellung eines Feuerschutzes für aus Titan bestehende Bauteilkörper einer Fluggasturbine und Bauteilkörper aus Titan für eine Fluggasturbine**

(30) Priorität: 16.04.2008 DE 102008019296
(71) Anmelder: Rolls-Royce Deutschland Ltd & Co KG, 15827 Dahlewitz (DE)
(72) Erfinder: Roth-Fagaraseanu, Dan, 14532, Stahnsdorf (DE); Wirth, Moritz, 12101, Berlin (DE)
(74) Vertreter: Wablat, Wolfgang

(57) **Zusammenfassung**

Die Erfindung bezieht sich auf ein Verfahren zur Herstellung eines Feuerschutzes für aus Titan bestehende Bauteilkörper einer Fluggasturbine. Um Bauteilkörper aus Titan ohne die Gefahr eines Titanfeuers bei Fluggasturbinen einsetzen zu können, sieht die Erfindung vor, dass in der Oberfläche des Bauteilkörpers eine oberflächennahe, nicht brennbare, intermetallische Phase aus Titan und aus mindestens einem weiteren Metall, ausgewählt aus der Gruppe von Aluminium, Nickel, Vanadium und Chrom, wobei auch Kombinationen umfasst sind, mit Hilfe eines Diffusionsprozesses gebildet wird.

## Beschreibung

Die Erfindung bezieht sich auf ein Verfahren zur Herstellung eines Feuerschutzes für aus Titan bestehende Bauteilkörper einer Fluggasturbine und auf nach dem Verfahren hergestellte Bauteilkörper aus Titan für eine Fluggasturbine.

Die Sicherheitsanforderungen für Fluggasturbinen, insbesondere für deren Kompressoren, erfordern, dass Titanfeuer innerhalb der Gasturbine, insbesondere im Kompressor, vollständig unter Kontrolle gebracht werden können. Es hat sich aber gezeigt, dass Titanfeuer nicht immer voll unter Kontrolle gebracht werden konnten. Daher ist es zu Unfällen aufgrund von Titanfeuer bei Fluggasturbinen gekommen.

Der Werkstoff Titan wird häufig für Kompressorgehäuse von Fluggasturbinen verwendet. Das wesentliche Problem dabei ist, dass Titangehäuse trotz des hohen Schmelzpunktes von Titan nicht alle Feuer unter Kontrolle bringen konnten, die von Rotorschaufeln aus Titan gezündet worden sind. Ein weiteres wesentliches Problem ist, dass im Falle von ernsthaftem Titanfeuer die Gehäuse selbst zu brennen beginnen und damit die Ausbreitung des Feuers unterstützen, anstatt dieses einzudämmen. In derzeitigen Konstruktionen von Fluggasturbinen wird Titan in Bereichen ausgeschlossen, in denen die Eindämmung eines Titanfeuers unbedingt erforderlich ist.

Bei Fluggasturbinen mit einem geteilten Titangehäuse und mit Rotorschaufeln aus Titan hat es in der Vergangenheit auch Titanfeuer gegeben. Um die Fähigkeit des Gehäuses zur Eindämmung eines Feuers zu verbessern, wird das Gehäuse von Einsatzsegmenten aus Stahl unterstützt. Diese Einsatzsegmente aus Stahl sorgen für den eigentlichen Feuerschutz. Alternativ werden auch komplett aus Stahl gefertigte Gehäuse eingesetzt. Die separaten Einsatzsegmente aus Stahl sind aber teuer in der Herstellung und machen den Gewichtsvorteil des Titangehäuses zunichte, verglichen mit modernen Ganz-Stahl-Gehäusen. Bei den Ganz-Stahl-Gehäusen ist eine Reihe ernsthafter Titanfeuer an den Rotorschaufeln aus Titan aufgetreten. Alle wurden aber vollständig innerhalb des Kompressorgehäuses unter Kontrolle gebracht, so dass diese Konstruktion als eine sehr sichere Konstruktion im Hinblick auf ein Titanfeuer angesehen werden kann.

Um die Gehäuse vor Bränden im Falle eines Titanfeuers zu schützen, werden besondere Schutzbeschichtungen verwendet. Dies sind:

Spezielle Schutzbeschichtungen aus Titanverbindungen, die bis zu einem gewissen Grade feuerresistent sind. Diese befinden sich seit längerer Zeit in der Entwicklung. Diese werden entweder am Titangehäuse verwendet, um dieses feuerfest zu machen, oder an den Rotorschaufeln aus Titan, um ein Titanfeuer hieran zu vermeiden.

Spezielle Schutzbeschichtungen auf der Innenseite der Gehäuse oder auf der Innenseite der anschleifbaren Schichten in den Gehäusen. Es wird zu diesem Zweck insbesondere Zirkonoxid verwendet. Die Schutzbeschichtungen müssen aber relativ dick sein, um wirksam gegen schwere Titanfeuer zu sein.

So ist es aus WO 2005/071228 A1 ein Schichtsystem für eine Rotor-/Statordichtung einer Strömungsmaschine, insbesondere einer Gasturbine vorbekannt. Dabei ist das Schichtsystem auf ein Bauteil, welches vorzugsweise aus einer Titanbasislegierung oder einer Titan-AluminiumLegierung gebildet ist, aufgebracht. Dieses Schichtsystem bildet eine Wärmedämmschicht mit einer niedrigen Wärmeleitfähigkeit und großer Rauheit. Wenn das Schichtsystem verletzt wird oder Schichten abplatzen, kann es zu einem Titanfeuer an dem beschichteten Bauteil kommen. Wenn das Bauteil selbst schon sehr dünn ist, wie eine Rotor- oder Statorschaufel, kann ein derartiges Schichtsystem nicht zusätzlich aufgebracht werden.

Nachteilig bei den herkömmlichen Konstruktionen mit Stahlgehäusen ist das relativ hohe Gewicht. Obwohl Stahl exzellente Eigenschaften in Bezug auf die Feuereindämmung hat, bewirkt die hohe Dichte von Stahl ein relativ hohes Gewicht. Stahl hat auch einen höheren thermischen Ausdehnungskoeffizienten als Titan. Für Gehäuse ist eine sehr geringe thermische Ausdehnung von besonderem Vorteil.

Die Nachteile der Zirkonoxyd-Schutzbeschichtungen sind, dass diese relativ hart sind, um diese auf komplexe Strukturen von Gehäusen und Stator- und Rotorschaufeln aufzubringen. Auch benötigen die Schutzbeschichtungen eine besondere Dicke, um wirksam zu sein, und weisen eine sehr rauhe Oberfläche auf. Schutzbeschichtungen können auf den Innenseiten von Gehäusen aufgebracht werden, können aber auf gasgespülten Oberflächen von Schaufeln oder kleinen, feinen Strukturen von Luftentnahmeöffnungen aus diesen Gründen nicht verwendet werden. Ein anderer Nachteil sind die Kosten für die Aufbringung der Schutzbeschichtungen und die begrenzten Möglichkeiten zur Untersuchung von Bauteilen mit diesen Beschichtungen.

Der Erfindung liegt die Aufgabe zugrunde, ein Verfahren zur Herstellung eines Feuerschutzes für aus Titan bestehende Bauteilkörper und nach dem Verfahren hergestellte Bauteilkörper aus Titan für eine Fluggasturbine derart zu schaffen, dass die Bauteilkörper aus Titan ohne die Gefahr eines Titanfeuers bei Fluggasturbinen einsetzbar sind.

Zur Lösung dieser Aufgabe sieht die Erfindung vor, dass in der Oberfläche des Bauteilkörpers eine oberflächennahe, nicht brennbare, intermetallische Phase aus Titan und aus mindestens einem weiteren Metall, ausgewählt aus der Gruppe von Aluminium, Nickel, Vanadium und Chrom, wobei auch Kombinationen umfasst sind, mit Hilfe eines Diffusionsprozesses gebildet wird. Damit wird es möglich, Bauteilkörper aus Titan für Fluggasturbinen, wie Gehäuseteile, Statorschaufeln und Rotorschaufeln, auch ohne die Gefahr eines Titanfeuers einzusetzen.

In einer Ausführungsform der Erfindung wird unter Hinzufügung von Aluminium eine Schicht aus Titan-Aluminid in der Oberfläche des Bauteilkörpers aus Titan gebildet. Dabei wird die Schicht aus Titan-Aluminid durch einen Diffusionsprozess entweder mittels Aufdampfung von reinem Aluminium bei Temperaturen oberhalb 650°C oder in einer Atmosphäre aus Aluminiumoxidpulver bei Temperaturen oberhalb vom 900°C in der Oberfläche des Bauteilkörpers aus Titan erzeugt. Auch kann die Aluminium-Schicht galvanisch auf der Oberfläche des Bauteilkörpers aus Titan erzeugt werden. Schließlich kann die Oberfläche des Bauteilkörpers aus Titan mit einer stark aluminiumhaltigen Farbe lackiert und anschließend das Aluminium durch einen Diffusionsprozess unter Wärmebehandlung in die Oberfläche des Bauteilkörpers aus Titan eindiffundiert werden. Dem Aluminium können auch Nickel, Vanadium oder andere Elemente zugesetzt werden.

In einer weiteren Ausführungsform der Erfindung kann unter Hinzufügung von Nickel zu dem Aluminium eine Schicht aus einer Nickel-Aluminium-Verbindung durch einen Diffusionsprozess auf der Oberfläche des Bauteilkörpers aus Titan gebildet werden.

Die Erfindung bezieht sich auch auf Bauteilkörper aus Titan für eine Fluggasturbine mit einer Feuerschutzausrüstung, wobei entweder eine äußere Schicht aus Titan-Aluminid oder aus einer Nickel-Titanlegierung in der Oberfläche des Bauteilkörpers ausgebildet ist.

Der Werkstoff Titan wird im Flugzeugbau bei Fluggasturbinen eingesetzt, weil Titan aufgrund seiner geringen Dichte eine erhebliche Gewichtsersparnis gegenüber Stahl erbringt. Im Gegensatz zu Nickel und Stahl, die erst bei höheren Temperaturen brennen, kann ein Titanfeuer aber schon bei Temperaturen oberhalb 1600°C bei einem Umgebungsdruck von 1 bar brennen. Bei einer Erhöhung des Druckes sinkt die Zündtemperatur des Titans. Wenn Rotorschaufeln aus Titan an Gehäusebauteilen anschleifen, kann der Schleifeffekt einen Funkenflug und damit die Gefahr eines Titanfeuers hervorrufen. Dieses Titanfeuer an den Rotorschaufeln kann sich leicht auf andere statische Bauteile wie Statorschaufeln, und Titangehäuse ausbreiten.

Bei Stator- und Rotorschaufeln aus Titan besteht ein weiterer Nachteil in der schlechten Wärmeleitfähigkeit von Titan. Hierbei ist das Verhältnis von Masse des Bauteils zur Oberfläche des Bauteils wesentlich. Da die Schaufelkanten dünn sind und wenig Masse haben, ist das Vermögen des Bauteils aus Titan, die Wärme abzutragen, schlecht, da wenig Volumen vorhanden ist.

Erfindungsgemäß wird deshalb vorgeschlagen, die Oberfläche eines Bauteilkörpers aus Titan für eine Fluggasturbine, insbesondere innerhalb eines Kompressors, zu passivieren. Dabei wird z. B. eine Schicht aus Titan-Aluminid auf der Oberfläche eines Bauteilkörpers aus Titan durch Aufbringen von Aluminium auf den Bauteilkörper und durch Eindiffundieren des Aluminiums in die oberflächennahe Schicht des Bauteilkörpers aus Titan gebildet. Die Diffusion erfolgt bei höheren Temperaturen in einem Ofen. Das Aluminium kann galvanisch aufgebracht werden, jedoch ist jedes Verfahren zur Oberflächenbehandlung von Titan mittels Aluminium möglich, das die nachfolgende Diffusion in einem Ofen ermöglicht.

Es hat sich gezeigt, dass Titan-Aluminid nicht selbst brennt, wie ungeschütztes Titan. Folglich sind das Risiko eines Titanfeuers oder ein Fehler bei der Brandbekämpfung verringert. Neben der Diffusion von Aluminium und der Bildung einer oberflächennahen intermetallischen Phase aus Titan und Aluminium in Form von Titan-Aluminid können andere intermetallischen Phasen in der Oberfläche eines Bauteilkörpers aus Titan erzeugt werden, welche stabile Oxidschichten bilden und welche den Bauteilkörper vor einem Feuer schützen.

Es kann auch eine Nickel-Aluminium-Phase in der Oberfläche durch einen Auftrag von Nickel mit Aluminium und einem nachfolgenden Diffusionsprozess gebildet werden. Nachteilig hierbei ist nur die hohe Temperatur für den Diffusionsprozess des Nickels in das Titan, verglichen mit dem Diffusionsprozess einer reinen Aluminiumschicht bei etwa 650°C.

Es ist möglich, mit dem erfindungsgemäßen Verfahren Rotor- oder Statorschaufeln oder andere Bauteilkörper aus Titan gegen Titanfeuer zu passivieren. Ein erfindungsgemäß passivierter Rotor aus Titan wird nicht brennen und folglich wird es nicht nötig sein, ein Titanfeuer einzudämmen.

Ein besonderer Vorteil des erfindungsgemäßen Verfahrens besteht darin, dass die Passivierung eines Bauteilkörpers aus Titan unabhängig von der Form des Bauteilkörpers ist. Damit kann jeder Bauteilkörper aus Titan für eine Fluggasturbine mit einer erfindungsgemäßen Feuerschutzausrüstung versehen werden. Die sich durch das erfindungsgemäße Verfahren ergebende Rauhigkeit der Oberfläche des Bauteilkörpers ist nicht größer als die von unbehandeltem, blanken Titan. Die galvanische Erzeugung der Schicht aus Titan-Aluminid ist mit geringen Kosten möglich. Der Diffusionsprozess kann in einem einfachen Wärmebehandlungsofen durchgeführt werden.

Es werden nachfolgend zwei verschiedene Verfahren zur Herstellung eines Feuerschutzes für aus Titan bestehende Bauteilkörper einer Fluggasturbine beschrieben:

### 1. Lackieren mit einer aluminiumhaltigen Farbe

Es wird eine stark aluminiumhaltige Farbe wie die unter dem Handelsnamen Sacrificial Paint Sermental WFX-2 von Sermatech Int. Inc. USA bekannte Farbe verwendet. Der zu behandelnde Bauteilkörper wird mit der aluminiumhaltigen Farbe lackiert. Der Diffusionsprozess wird unabhängig von der Vorbehandlung (Lackieren, Verdampfen, Galvanisieren) in einer nachfolgenden Wärmebehandlung im Wärmeofen bei etwa 600 bis 700°C durchgeführt. Die organischen Bestandteile der Farbe verbrennen im Ofen. Das Aluminium diffundiert in die Oberfläche des Bauteilkörpers und bildet eine oberflächennahe, nicht brennbare intermetallische Phase aus Titan und Aluminium aus.

### 2. Aufdampfen von Aluminium

Auf dem Bauteilkörper aus Titan wird reines Aluminium in einem Ofen verdampft. Das Aluminium schmilzt bei etwa 650°C, diffundiert dann in das Titan und bildet eine Diffusionsschicht aus einer oberflächennahen, nicht brennbaren, intermetallischen Phase mit dem Titan.

Es kann zur Behandlung des Bauteilkörpers aus Titan auch eine Atmosphäre aus Aluminiumoxidpulver in einem Ofen erzeugt werden. Das Aluminiumoxid schmilzt erst bei etwa 900°C und diffundiert dann in das Titan ein.

Bei beiden Aufdampfverfahren wird jeweils die Gammaphase eines Titan-Aluminids als Intermetallschicht erzeugt. Damit ist eine intermetallische Phase in der Oberfläche des Bauteilkörpers aus Titan erzeugt, die nicht brennt und damit das Bauteil aus Titan vor einem Titanfeuer schützt. Die Intermetallschicht kann nicht vom Bauteilkörper abfallen, wie eine separat aufgebrachte spezielle Schutzbeschichtung.

Da die angestrebte Gammaphase des Titan-Aluminids leicht spröde werden kann, werden dem Aluminium jeweils Nickel, Vanadium oder andere Elemente hinzugefügt, um die Sprödigkeit zu vermeiden.

## Patentansprüche

1. Verfahren zur Herstellung eines Feuerschutzes für aus Titan bestehende Bauteilkörper einer Fluggasturbine,
**dadurch gekennzeichnet,**
**dass** in der Oberfläche des Bauteilkörpers eine oberflächennahe, nicht brennbare, intermetallische Phase aus Titan und aus mindestens einem weiteren Metall, ausgewählt aus der Gruppe von Aluminium, Nickel, Vanadium und Chrom, wobei auch Kombinationen umfasst sind, mit Hilfe eines Diffusionsprozesses gebildet wird.

2. Verfahren nach Anspruch 1, **dadurch gekennzeichnet, dass** unter Hinzufügung von Aluminium eine Schicht aus Titan-Aluminid in der Oberfläche des Bauteilkörpers aus Titan gebildet wird.

3. Verfahren nach Anspruch 2, **dadurch gekennzeichnet, dass** die Schicht aus Titan-Aluminid durch einen Diffusionsprozess mittels Aufdampfung von reinem Aluminium bei Temperaturen oberhalb 650°C in der Oberfläche des Bauteilkörpers aus Titan erzeugt wird.

4. Verfahren nach Anspruch 2 **dadurch gekennzeichnet, dass** die Schicht aus Titan-Aluminid durch einen Diffusionsprozess in einer Atmosphäre aus Aluminiumoxidpulver bei Temperaturen oberhalb von 900°C in der Oberfläche des Bauteilkörpers aus Titan erzeugt wird.

5. Verfahren nach Anspruch 2, **dadurch gekennzeichnet, dass** die Aluminiumschicht galvanisch auf der Oberfläche des Bauteilkörpers aus Titan erzeugt und anschließend durch eine Wärmebehandlung eindiffundiert wird.

6. Verfahren nach Anspruch 2, **dadurch gekennzeichnet, dass** die Oberfläche des Bauteilkörpers aus Titan mit einer stark aluminiumhaltigen Farbe lackiert und anschließend das Aluminium durch einen Diffusionsprozess unter Wärmebehandlung in die Oberfläche des Bauteilkörpers aus Titan eindiffundiert wird.

7. Verfahren nach einem der Ansprüche 2 bis 6, **dadurch gekennzeichnet, dass** dem Aluminium Nickel, Vanadium oder andere Elemente zugesetzt werden.

8. Verfahren nach Anspruch 1, **dadurch gekennzeichnet, dass** unter Hinzufügung von Nickel eine Schicht aus einer Nickel-Titan-Verbindung durch einen Diffusionsprozess in der Oberfläche des Bauteilkörpers aus Titan gebildet wird.

9. Bauteilkörper aus Titan für eine Fluggasturbine mit einer Feuerschutzausrüstung, **dadurch gekennzeichnet, dass** eine äußere Schicht aus Titan-Aluminid in der Oberfläche des Bauteilkörpers aus Titan ausgebildet ist.

10. Bauteilkörper aus Titan für eine Fluggasturbine mit einer Feuerschutzausrüstung, **dadurch gekennzeichnet, dass** eine äußere Schicht aus einer Nickel-Titan-Verbindung in der Oberfläche des Bauteilkörpers ausgebildet ist.
